# EUROPEAN PATENT APPLICATION

(11) **EP 1 734 473 A1**
(43) Date of publication of application: **20.12.2006**
(21) Application number: 06113116.5
(22) Date of filing: 26.04.2006
(51) Int. Cl.: G06Q 40/00, G06F 9/44

(54) **Methods for upgrading a trading system**

(30) Priority: 02.05.2005 SE 0500990; 02.05.2005 US 118784
(71) Applicant: Cinnober Financial Technology AB, 112 46 Stockholm (SE)
(72) Inventor: Edvardsson, Hannes, 752 27 Uppsala (SE)
(74) Representative: Loqvist, Gabriel Mathias

(57) **Abstract**

The present invention relates to methods, a system, a computer apparatus, computer readable mediums and computer program products for electronic trading systems. The method comprises the steps of: receiving a transaction message including data of a first type at a receiving gateway; obtaining route information comprising instructions regarding at least one algorithm component to be used for processing the message of a plurality of algorithm components; calling the at least one algorithm component included in the route information; processing the message in the at least one component in order to output data of a defined output type of the component. Furthermore, the invention relates to a graphical user interface enabling an operator to create processing chains including algorithm components

## Description

### TECHNICAL AREA

The present invention relates to electronic trading systems for trading stocks, bonds, futures, options and other financial instruments, and in particular to methods, a computer apparatus, computer readable mediums and computer program products for such systems. Furthermore, the invention relates to graphical user interfaces enabling an operator to create processing chains including algorithm components

### BACKGROUND OF THE INVENTION

During the last decade, almost all the world's exchanges and marketplaces have introduced electronic trading systems. These systems either replace the traditional trading floors or are used as complements to them. Today a large number of exchanges throughout the world utilizes electronic trading to trade stocks, bonds, futures, options and other financial instruments. These electronic exchanges are generally includes three basic components, namely mainframe computers (host), communication servers, and the exchanges participants' computers (client). The host constitutes, so to speak, the heart of the electronic trading system. The hosts operations include, for example, order-matching, maintaining order books and positions or price information. Participants, e.g. traders, are capable of communicating with the host by means of high speed data lines, high speed communications servers and the Internet. Thus, the traders can participate in the market by means of the clients communicating with the host.

As the competition among exchanges and marketplaces increases, it has become more and more important for the business analysts of the exchanges to be able to change the behavior of the electronic trading systems. Examples of functionality that needs to be easily changeable are new traded products or new matching rules, i.e. rules defining how, for example, buy and sell orders are matched in order to establish a deal.

The electronic trading systems of the current generation are often delivered with an impressive set of functionality. The behavior can be changed by changing configuration parameters. However, the number of parameters that control the system can become very large, which makes it difficult and time consuming to maintain a system configuration and to test the system.

One major reason for the large number of parameters is that handling of an electronic order is a process made in several steps, where different processing methods can be applied in each step depending on the exchange's business model. Today's systems need to hold a parameter set that can control every combination of different processes in the different steps.

If the exchange system requires an upgrading to include a functionality that is not part of the supported set of functionalities, it is often necessary to deliver a new version of the entire system, since the new code that implements the new functionality need to be linked into the system processes. This entails that the system is subjected to heavy burden in form a computational power during implementation and testing phases. Furthermore, this also leads to long upgrade cycles, where exchange requirements need be analyzed by the software vendor, implemented, the system delivered, installed and thereafter tested and verified by the exchange. This problem will probably increase in extent due to the fact that the number of products traded in electronic trading systems likely will swell in the future the same time as such product become more and more sophisticated and hence more and more complex.

Thus, there is need of improved systems and methods for upgrading such a system with new functionality, i.e. functionality that is not a part of the supported set of functionalities, in an efficient way.

### SUMMARY OF THE INVENTION

An object of the present invention is to provide improved systems and methods for such a system that can be upgraded with new functionality, i.e. functionality that is not a part of the supported set of functionalities, in a efficient way both regarding to time consumption and labor demand.

Another object of the present invention is to provide improved systems and methods for such a system that can be upgraded with new functionality in an efficient way with respect of computational power consumed during, for example, implementation and testing phases.

These and other objects are achieved according to the present invention by providing a system, methods, a computer apparatus, a computer program, and a computer readable medium having the features defined in the independent claims. Preferred embodiments are defined in the dependent claims.

According to a first aspect of the present invention, there is provided a method for an electronic trading system. The method comprises the steps of: receiving a transaction message including data of a first type at a receiving gateway; obtaining route information comprising instructions regarding at least one algorithm component to be used for processing the message of a plurality of algorithm components; calling the at least one algorithm component included in the route information; processing the message in the at least one component in order to output data of a defined output type of the component.

According to a second aspect of the present invention, there is provided an electronic trading system connected to a memory, in turn, comprising a plurality of algorithm components; and the system is adapted to receive a transaction message including data of a first type; obtain route information related to the transaction message, the route information comprising instructions regarding at least one algorithm component to be used for processing the message; call the at least one algorithm component included in the route information, wherein the message is processed in the at least one component in order to output data of the defined output type of the component; and publish data of the defined output type.

According to third aspect of the present invention, there is provided a computer program product, which when executed on a computer, performs the method according to the first aspect of the present invention.

According to a fourth aspect of the present invention, there is provided a computer readable medium comprising instructions for bringing a computer to perform the method according to the first aspect.

According to a fifth aspect of the present invention, there is provided a method for enabling an operator of a computer apparatus connected with a trading system to create processing chains for processing transaction messages by means of objects displayed on a display screen. The method comprises the steps of displaying objects on a display screen, the objects including objects corresponding to components adapted to process input data of a defined input type and to output data of a defined output type, wherein each component is adapted to define a set of configuration parameters; creating at least one chain of objects corresponding to components in response to operator actions by means of an input device; and performing a validation test of the at least one chain, including checking whether the input of a component complies with the output of a previous object in the chain.

According to further aspects of the present invention, there is provided a computer program product, which when executed on a computer, performs the steps in accordance with the method of the fifth aspect and a computer readable medium comprising instructions for bringing a computer to perform the method of the fifth aspect.

Thus, the invention solves the problem with large number of configuration parameters and the long upgrade cycles by packaging the functionality in components that are dynamically loaded in run-time by the system. Every component defines a small step in the processing of a business transaction, and every component has its own characteristic processing method.

A component is a package of object code that processes input of a particular format according to algorithms controlled by a set of parameters and outputs data in a particular format. The formats are declared by the component.

A system-level configuration specifies a chain of components that handles an incoming transaction. The components are chosen from a library of components and are loaded in run-time. The library can be located on the machine that the component code executes on, or on a remote storage device that can be reached by the machine. The required input parameters and resulting output results for a component are declared in a component interface specification. The input parameter of a chain step must be of the same type as the output type for the previous step.

As realized by the person skilled in the art, the methods of the present invention, as well as preferred embodiments thereof, are suitable to realize as a computer program or a computer readable medium.

These and other advantages with, and aspects of, the present invention will become apparent from the following detailed description and from the accompanying drawings.

### SHORT DESCRIPTION OF THE DRAWINGS

In the following description of an embodiment of the invention, reference will be made to the accompanying drawings of which:
- Fig. 1: is a general view of a conventional electronic trading system;
- Fig. 2: shows schematically the general principles of the method for an electronic trading system according to the present invention;
- Fig. 3: shows schematically a first embodiment of the method according to the present invention;
- Fig. 4: shows schematically a second embodiment of the method according to the present invention;
- Fig. 5: shows the general principles of the method that enables for an operator, e.g. a business analyst, of a computer apparatus connected to a trading system to create processing chains for processing transaction messages by means of objects displayed on a display screen;
- Fig. 6: schematically shown an example of a visual representation on a display screen of a computer apparatus of a chain of components created by means of the configuration GUI client according to the present invention;
- Fig. 7: schematically shown another example of a visual representation on a display screen of a computer apparatus of a chain of components created by means of the configuration GUI client according to the present invention;
- Fig. 8: further embodiment of the method for an electronic trading system according to the present invention; and
- Fig. 9: schematically shows an embodiment of an electronic trading system according to the present invention; and
- Fig. 10: schematically shows another embodiment of an electronic trading system according to the present invention.

### DETAILED DESCRIPTION OF THE INVENTION

In the following there will be discussed preferred embodiments of the methods and system for

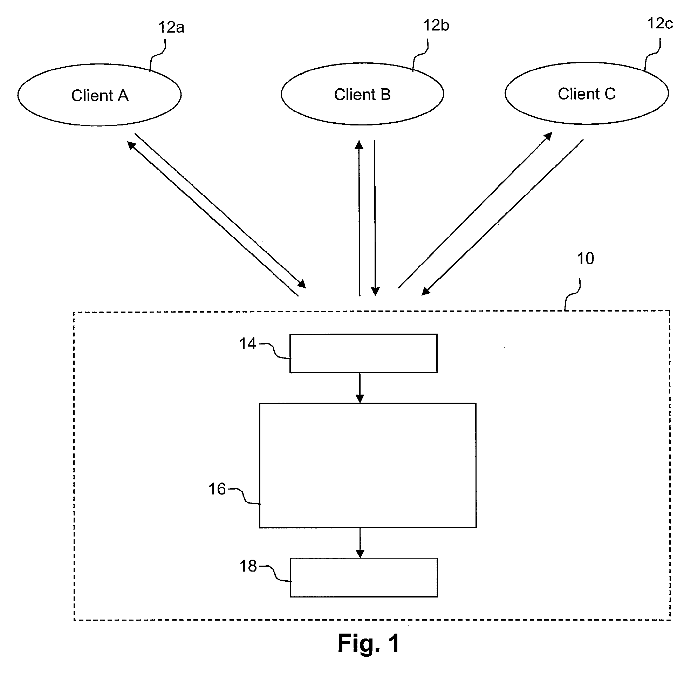

With reference first to Fig. 1, a conventional electronic trading system will be discussed. A number of clients, here indicated by client A 12a, client B 12b, and client C 12c, communicates with the trading or exchange system 10. Thus, traders can participate in the market by means of the clients 12a-12c communicating with the exchange system 10. The clients 12a-12c may link to the system 10 via high speed data lines, high speed communication servers, or the Internet. High speed data lines establish direct connection between a client and the system. Connection can also be established between the client and the system by configuring high speed networks or communication servers at strategic access points in locations where traders physically are located.

Internet is a third communication means enabling traders, using, for example, the clients 12a-12c, can communicate using, for example, high speed data lines connected to the Internet. Hence, trades are allowed to be located anywhere they can establish a connection to the Internet.

The system 10 comprises a receiving gateway 14 arranged to receive incoming messages or transactions, for example, an order to buy a stock at a defined price from the clients 12a-12c. Thereafter, the transactions are sent by the receiving gateway 14 to a business logic module 16 where the transactions are processed in accordance with the logic. The results are, in turn, sent further on to a publisher gateway 18, which publishes the results. The functions and design of the business logic module, as well a the receiving gateway and the publisher gateway, are not described in further detail herein as they are well known to the man skilled within the art.

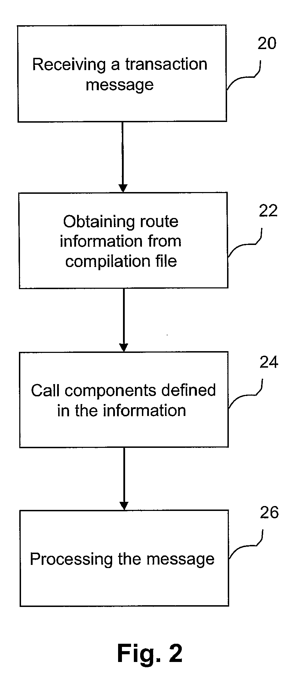

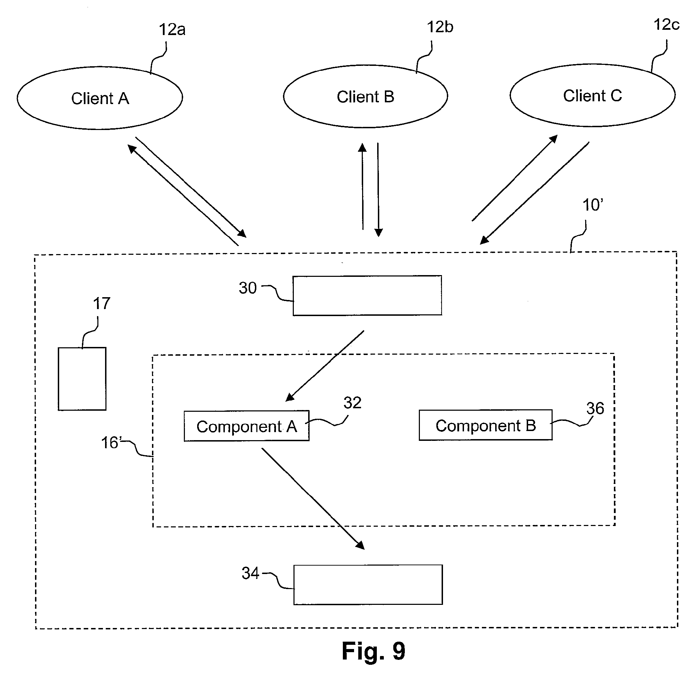

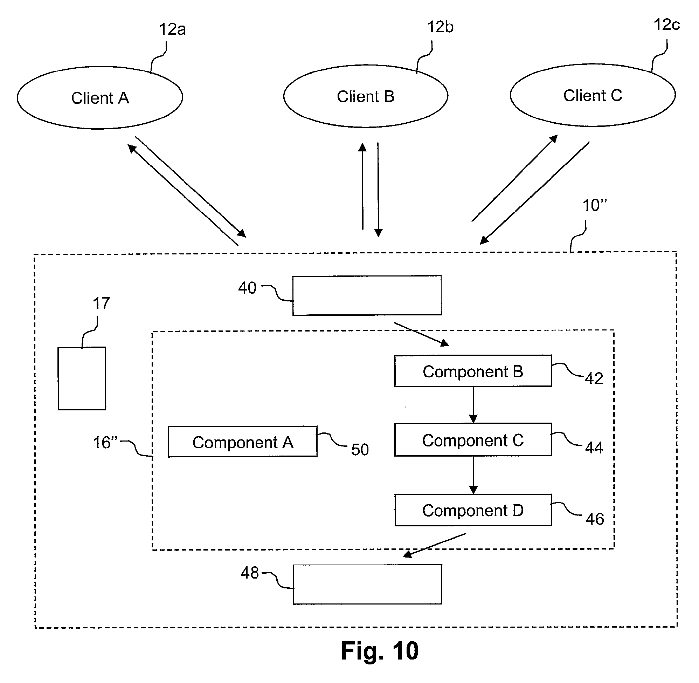

Turning now to Fig. 2, the general principles of the method for an electronic trading system according to the present invention will be discussed. The method according to the present invention defines the business logic of the system. Hence, according to the invention, the business logic module 16 shown in Fig. 1 is replaced with the algorithm components described hereinafter, which also is described with reference to Fig. 9 and 10.

First, at step 20, a transaction message including data of a first type is received at a receiving gateway. Then, at step 22, information comprising instructions regarding at least one algorithm component to be used for processing the message of a plurality of algorithm components is obtained, i.e. instructions regarding which component to call upon is stored in a configuration file. The components are stored in library that may be located in a memory of the system in which the method, i.e. the code, is executed or as an alternative it may be located on a remote storage means adapted to communicate with the system, for example, via a wireless communication link. The storage means may be a database or another computer apparatus. Every component has an own set of configuration parameters that define how the processing is done in that component.

Thereafter, at step 24, the at least one algorithm component included in the information is called upon. Finally, at step 26, the message is processed in the at least one component in order to output data of a defined output type. To elaborate, the functionality is packaged in components that are dynamically loaded in run-time by the system. Every component defines a small step in the processing of a business transaction, and every component has its own characteristic processing method. A component is a package of object code that processes input of a particular format according to algorithms controlled by a set of parameters and outputs data in a particular format. The formats are declared by the component. A system-level configuration specifies a chain of components that handles an incoming transaction. The components are chosen from a library of components and are loaded in run-time. The library can be located on the machine that the component code executes on, or on a remote storage device that can be reached by the machine. The required input parameters and resulting output results for a component are declared in a component interface specification. The input parameter of a chain step must be of the same type as the output type for the previous step.

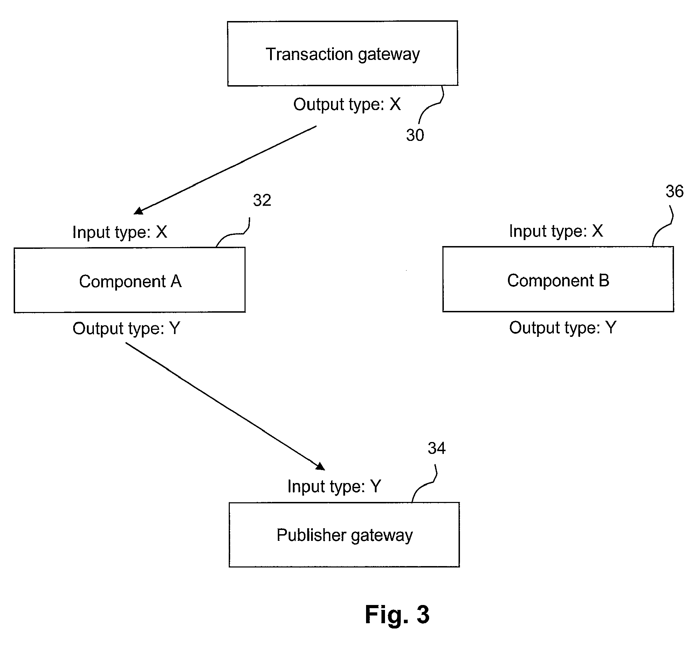

With reference now to Fig. 3, a first embodiment of the method according to the present invention will be discussed. A transaction is received by a system Gateway. The transaction data is of type X. There is a publisher gateway 34 that can publish results of type Y. In the component library, which may be stored in a memory 17, there are two components, component A and component B 32 and 36, respectively, available that are adapted to receive data of type X as input and that outputs data of type Y. In the configuration file, the transaction gateway 30 has been instructed to call component A 32. Component A 32 has been instructed to send its result to the publisher gateway 34. It should be noted that since the components have been compiled separately and are loaded in run-time, it is possible to add a new component to the library without modifying the existing components or the gateways.

An exemplary system according to the invention is shown in Fig. 9. The system 10' comprises a receiving gateway 30 arranged to receive incoming messages or transactions, for example, an order to buy a stock at a defined price from the clients 12a-12c. Thereafter, the transactions are sent by the receiving gateway 30 to a business logic module 16' where the transactions are processed in accordance with the logic according to the present invention. The results are, in turn, sent further on to a publisher gateway 34, which publishes the results. Moreover, the system comprises, or has access to, at least one memory 17, which may be adapted to comprise the component library. The business logic module 16' comprises, as indicated above, component A and component B 32 and 36, respectively, adapted to receive data of type X as input and that outputs data of type Y. In the configuration file, the transaction gateway 30 has been instructed to call component A 32. Component A 32 has been instructed to send its result to the publisher gateway 34. In other words, the conventional system shown in Fig. 1 can be modified to achieve the objects of the present invention.

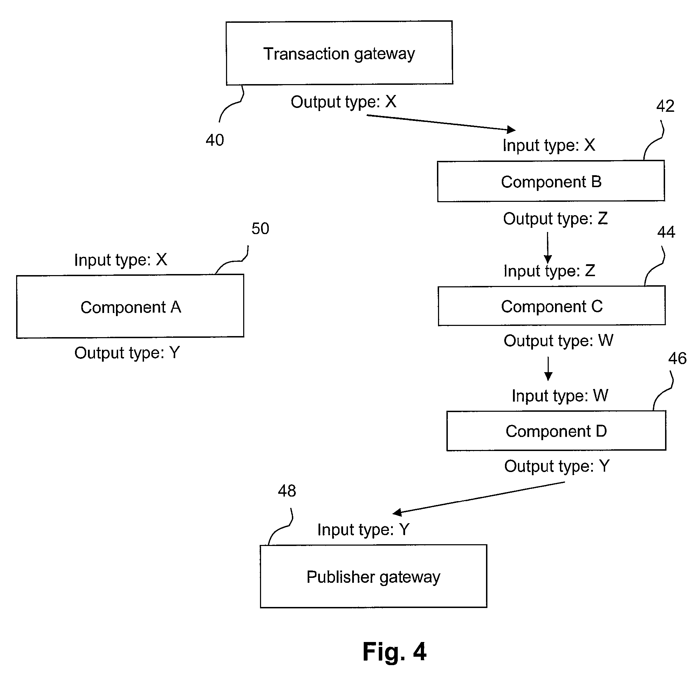

Hereinafter, with reference to Fig. 4, a second embodiment of the method according to the present invention will be discussed. According to this embodiment, it is possible for a component to define an own chain of subcomponents that are called from the component library, which may be stored in the memory 17. A transaction is received by a system Gateway. The transaction data is of type X. There is a publisher gateway 48 that can publish results of type Y. In the component library, there are two components, component A and component B 42 and 50, respectively, available that are adapted to receive data of type X as input. However, component A 50 is adapted to output data of type Y and component B 42 data of type Z. In the configuration file, the transaction gateway 40 has been instructed to call component B 42. Component B 42 has been instructed to send its result to component C 44, which is adapted to receive data of type Z and to output data of type W. Furthermore, component C 44 has, in turn, been instructed to send its output to component D 46, which is adapted to receive data of type W and to output data of type Y. Component D 46 has been instructed to send its result to the publisher gateway 48. It should be noted that since the components have been compiled separately and are loaded in run-time, it is possible to add a new component to the library without modifying the existing components or the gateways. As the man skilled within the art readily realizes, the examples discussed with reference to Figs. 3 and 4 are only exemplifying.

For example, the number of components in the sub-chain shown in Fig. 4 is arbitrary.

Another exemplary system according to the invention is shown in Fig. 10. The system 10" comprises a receiving gateway 40 arranged to receive incoming messages or transactions, for example, an order to buy a stock at a defined price from the clients 12a-12c. Thereafter, the transactions are sent by the receiving gateway 40 to a business logic module 16" where the transactions are processed in accordance with the logic according to the present invention. The results are, in turn, sent further on to a publisher gateway 48, which publishes the results. Moreover, the system comprises, or has access to, at least one memory 17, which may be adapted to comprise the component library. The business logic module 16" comprises, as indicated above, two components, component A and component B 42 and 50, respectively, adapted to receive data of type X as input. However, component A 50 is adapted to output data of type Y and component B 42 data of type Z. In the configuration file, the transaction gateway 40 has been instructed to call component B 42. Component B 42 has been instructed to send its result to component C 44, which is adapted to receive data of type Z and to output data of type W. Furthermore, component C 44 has, in turn, been instructed to send its output to component D 46, which is adapted to receive data of type W and to output data of type Y. Component D 46 has been instructed to send its result to the publisher gateway 48.

An operator, for example an exchange business analysts, of a computer apparatus of a trading system, for example, the system shown in Fig. 1, may create chains and sub-chains of components via a configuration GUI client that allows components to be "dragged and dropped" to form such chains. Thus, the operator can build chains and sub-chains of components by "dragging and dropping" objects on a display screen of the computer apparatus by using an input device, such as a pointing device, e.g. a mouse, or a keyboard. The GUI client validates that the output and input types match in real time as chains are built in the GUI. This makes it easy for the operator to experiment with new business models. As an example, the operator could replace the component that sorts orders based on time priority with a component that sorts orders based on the order size. In this way, the operator can effectively create a completely new business model in the GUI.

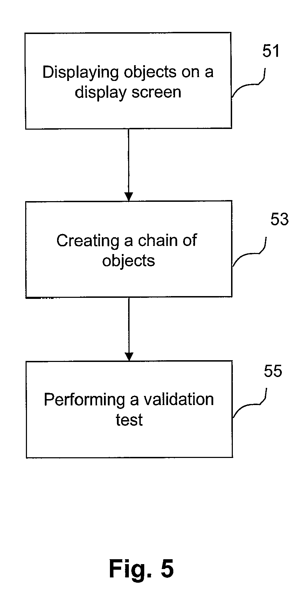

Turning now to Fig. 5, the general principles of the method that enables for an operator, e.g. a business analyst, of a computer apparatus connected to a trading system to create processing chains for processing transaction messages by means of objects displayed on a display screen will be discussed. Preferably, this method is implemented in the form of a GUI. First, at step 51, objects are displayed on a display screen, wherein the objects including objects corresponding to components adapted to process input data of a defined input type and to output data of a defined output type, wherein each component is adapted to define a set of configuration parameters. Then, at step 53, at least one chain of objects corresponding to components in response to operator actions by means of an input device is created. Thereafter, at step 55, a validation test of the at least one chain, including checking whether the input of a component comply with the output of a previous object in the chain, is performed.

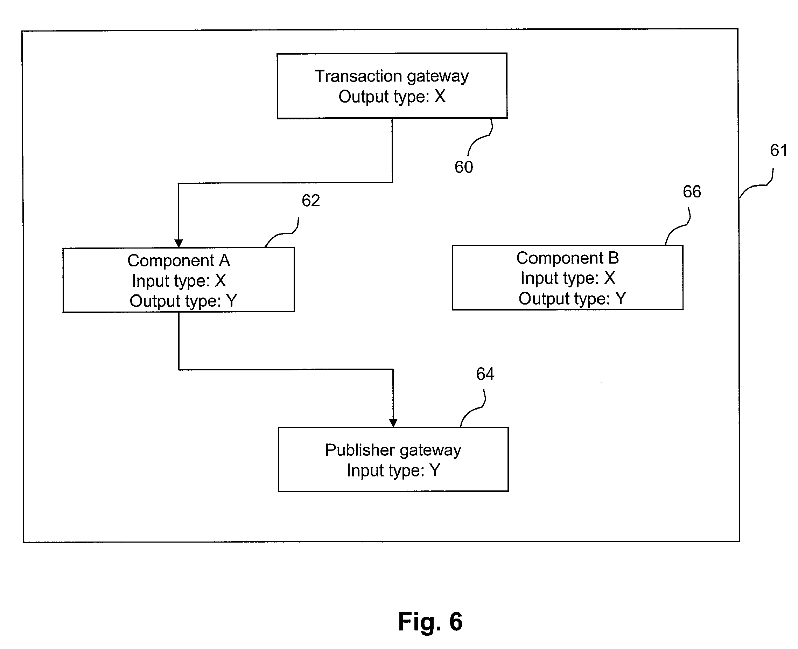

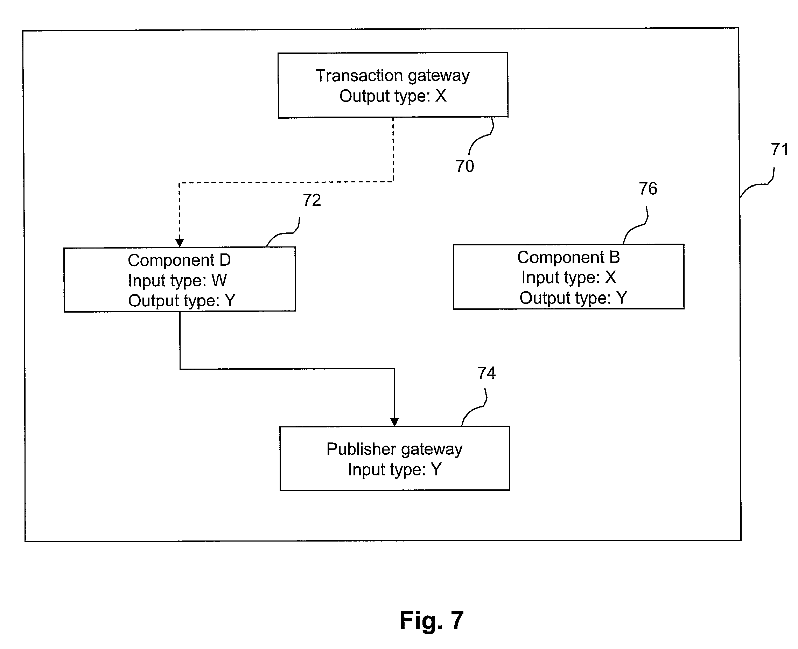

Referring now to Fig. 6, an example of a visual representation on the display screen of the computer apparatus of a chain of components created by means of the configuration GUI client according to the present invention will be discussed. On the display screen 61, an object 60 representing the transaction gateway is connected to a component A 62, which, hence, represents that the transaction gateway 60 has been instructed to call component A 62 in the configuration file. Moreover, component A is connected to a publisher gateway 64, which represents that Components A 62 has been instructed to send its result to the publisher gateway 64. When the operator has built a chain, the compliance of the configuration is checked. That is, in this case, it is tested whether component A 62 is adapted to receive data of type X as input and that outputs data of type Y. If the selected components do not comply, e.g. if a first components is adapted to output data type Q and the subsequent object or components is adapted to accept a data type R, the operator is alarmed. In order words, the GUI alarms the operator that the configuration is invalid. This example will however be discussed with reference to Fig. 7. If the selected chain of components does comply, i.e. if the selected chain (chains) is (are) valid, the GUI informs the operator and presents the user with the set of configuration parameters that result from the selected set of components. Components that are not selected to belong to the chain do not contribute to the parameter set. In this way, only parameters that actually will be used are presented to the user, which significantly facilitates the configuration process. In the case shown in Fig. 6, the selected chain is valid and if the operator had chosen component B 66 instead of components A 62, the chain had also been verified as valid since component B also accepts data of type X and outputs data of type Y.

With reference now to Fig. 7, a case where a selected chain of components is invalid will be discussed. On the display screen 71, an object 70 representing the transaction gateway is connected to a component D 72, which, hence, represents that the transaction gateway 60 has been instructed to call component D 72 in the configuration file. Moreover, component D is connected to a publisher gateway 74, which represents that Components A 72 has been instructed to send its result to the publisher gateway 74. When the operator has built a chain, the compliance of the configuration is checked. That is, in this case, it is tested whether component A 72 is adapted to receive data of type X as input and that outputs data of type Y. But, as component D is adapted to receive data of type W and the transaction gateway sends data of type X, this connection is not valid, which is indicated with a dashed line I Fig. 7. Thus, the selected components do not comply and the operator is alarmed. In order words, the GUI alarms the operator that the configuration is invalid. If the operator instead had chosen component B 76, the chain had been verified as valid since component B 76 accepts data of type X as input and outputs data of type Y.

In addition, the invention makes it possible for the operator to write own components that can replace existing components in the chains, if the delivered library does not contain a particular functionality. As long as the new component accepts the output of the previous step and produces a result of the input type of the next component, the exchange is completely free to implement any new functionality, including defining a new sub-chain of new components.

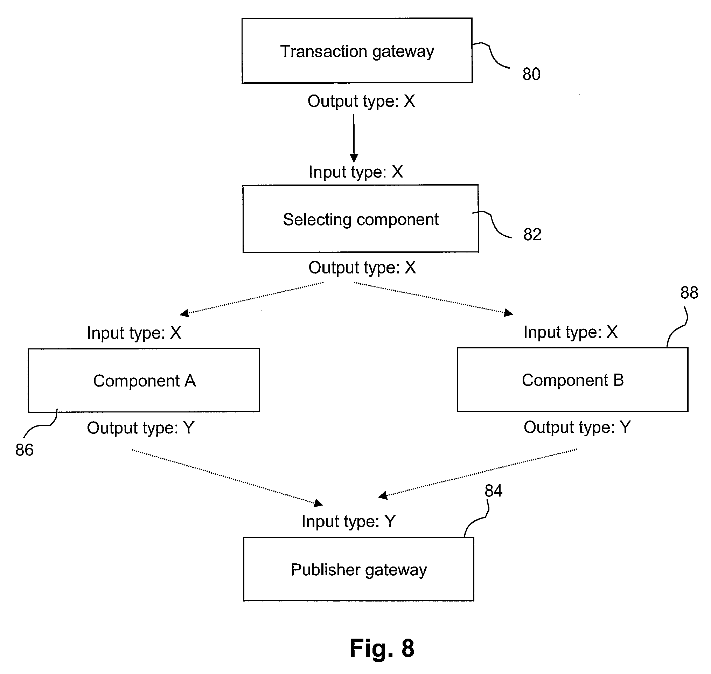

With reference to Fig. 8, a further embodiment of the method for an electronic trading system according to the present invention will be discussed. A configuration need not be static: there exists a special type of component, called "selecting component". This component does not define an own output type, it simply passes on the input to another component. However, the chooser component can be configured to have a number of potential components to pass on the input to, and is responsible for selecting one of these components. The process of selecting one of the potential next step components can be made in compiled code; however, the chooser component can make a callout to a chooser algorithm expressed in an interpreted script language. This scripted algorithm is part of the configuration and can thus be modified without any code having to be compiled.

This case is illustrated in Fig. 8. A transaction is received by a system Gateway. The transaction data is of type X. There is a publisher gateway 84 that can publish results of type Y. In the component library, there are two components, component A and component B 32 and 36, respectively, available that are adapted to receive data of type X as input and that outputs data of type Y. In the configuration file, the transaction gateway 30 has been instructed to call a selecting component 82. In this illustrative case, the selecting component 84 has two potential components to pass on the input to, namely component A 86 and component B 88. In Fig. 8, the possible paths are indicated with dotted lines.

The inter-component communication and callouts are handled by a component engine. The output of a component, although logically passed to the next component, is in reality passed back to the engine which reads the configuration, evaluates callouts and calls a new component based on the result.

Although specific embodiments have been shown and described herein for purposes of illustration and exemplification, it is understood by those of ordinary skill in the art that the specific embodiments shown and described may be substituted for a wide variety of alternative and/or equivalent implementations without departing from the scope of the invention. Those of ordinary skill in the art will readily appreciate that the present invention could be implemented in a wide variety of embodiments, including hardware and software implementations, or combinations thereof. As an example, all functions of the inventive method and the system can be implemented in a server connected to a large number of sending systems and receiving systems. This application is intended to cover any adaptations or variations of the preferred embodiments discussed herein. Consequently, the present invention is defined by the wording of the appended claims and equivalents thereof.

## Claims

1. A method for an electronic trading system (10', 10") comprising the steps of:
receiving (20) a transaction message including data of a first type at a receiving gateway (30, 40);
obtaining (22) route information comprising instructions regarding at least one algorithm component (32, 36; 42, 50) to be used for processing said message of a plurality of algorithm components;
calling (24) said at least one algorithm component (32, 36; 42, 50) included in said route information;
processing (26) said message in said at least one component (32, 36; 42, 50) in order to output data of a defined output type of said component.

2. The method according to claim 1, further comprising the step of sending said message to a output gateway (34; 48) arranged to receive data of said defined output type, wherein said receiving gateway is a transaction gateway and said output gateway is a publisher gateway.

3. The method according to any one of claims 2, wherein each component is adapted to process input data of a defined input type and to output data of a defined output type.

4. The method according to any one of preceding claims 1-3, wherein said step of processing comprises the step of processing said message in each component of a chain of components (42, 44, 46), wherein a first component (42) in said chain is adapted to process a message including data of said first type and a last component (46) of said chain is adapted to output data of a type said output gateway (40) is adapted to receive.

5. The method according to any one of preceding claims 2-4, wherein a component (82) is adapted to define a chain of components (88), wherein a first component (88) in said chain is adapted to process a message including data of a first type and a last component (88) of said chain is adapted to output data of a type said output gateway (84) is adapted to receive.

6. The method according to any one of preceding claims, wherein each component is adapted to define a set of configuration parameters, said parameters being adapted to define the processing of a received message including said output type.

7. The method according to any one of preceding claims, further comprising the step of:
calling a component of said plurality of components included in said route information adapted to pass a received data further to a subsequent component.

8. The method according to claim 5, wherein said component of said plurality of components included in said route information adapted to pass a received data further to a subsequent component further is adapted to select which component to pass said data.

9. An electronic trading system (10', 10") comprising at least one memory (17) containing a plurality of algorithm components, wherein said system (10', 10") is adapted to
receive a transaction message including data of a first type;
obtain route information related to said transaction message, said route information comprising instructions regarding at least one algorithm component to be used for processing said message;
call said at least one algorithm component included in said route information, wherein said message is processed in said at least one component in order to output data of the defined output type of said component; and
publish data of the defined output type.

10. The system according to claim 9, wherein each component is adapted to process input data of a defined input type and to output data of a defined output type.

11. The system according to claim 9 or 10, further comprising a receiving gateway (30; 40) adapted to receive said message and a publisher gateway (34; 48) adapted to receive data of a defined output type.

12. The system according to any one of preceding claims 9-11, wherein said message is processed in each component of a chain of components (42, 44, 46), wherein a first component (42) in said chain is adapted to process a message including data of said first type and a last component (46) of said chain is adapted to output data of a type to be published.

13. The system according to any one of preceding claims 9-12, wherein a component (82) is adapted to define a chain of components (88), wherein a first component (88) in said chain is adapted to process a message including data of a first type and a last component (88) of said chain is adapted to output data of a type to be published.

14. The system according to any one of preceding claim 9-13, wherein each of said components includes a set of configuration parameters defining the processing of a message being performed in respective component.

15. The system according to any one of preceding claim 9-14, wherein said system is adapted to call a component of said plurality of components included in said route information, said component being adapted to pass a received data further to a subsequent component.

16. The system according to claim 15, wherein said component of said plurality of components included in said route information adapted to pass a received data further to a subsequent component further is adapted to select which component to pass said data.

17. A computer program product, which when executed on a computer device, performs the steps in accordance with any of claim 1-8.

18. A computer readable medium comprising instructions for bringing a computer to perform the method according to any one of the claims 1-8.

19. A method for assisting an operator of an electronic trading system to create processing chains for processing transaction messages by means of objects (60, 62, 64, 66; 70, 72, 74, 76) displayed on a display screen (61; 71), said method comprising the steps of:
displaying (51) objects on a display screen, said objects including objects corresponding to components adapted to process input data of a defined input type and to output data of a defined output type, wherein each component is adapted to define a set of configuration parameters;
creating (53) at least one chain of objects corresponding to components in response to operator actions by means of an input device; and
performing (55) a validation test of said at least one chain, including checking whether the input of a component comply with the output of a previous object in said chain.

20. The method according to claim 19, further comprising the step of informing the operator of the result of said validation test.

21. The method according to claim 19 or 20, wherein said validation test is performed in real time.

22. The method according to any one of preceding claims 19-21, further comprising the step of presenting a set of configuration parameters resulting from the selected components for the operator on said display screen.

23. A computer program product, which when executed on a computer device, performs the steps in accordance with any of claim 19-22.

24. A computer readable medium comprising instructions for bringing a computer to perform the method according to any one of the claims 19-22.

25. A computer apparatus for receiving commands related to creation of processing chains for processing transaction messages, comprising:
an interface for displaying objects (60, 62, 64, 66; 70, 72, 74, 76) on a display screen (61; 71), said objects including objects corresponding to components adapted to process input data of a defined input type and to output data of a defined output type, wherein each component is adapted to define a set of configuration parameters;
means for displaying at least one chain of objects corresponding to components created in response to operator actions by means of an input device; and
means for performing a validation test of said at least one chain, including checking whether the input of a component comply with the output of a previous object in said chain.

26. The computer apparatus according to claim 25, further comprising means for displaying a result of said validation test, wherein the operator is presented for the result on said display screen.

27. The computer apparatus according to claim 25 or 26, wherein said validation test is performed in real time.

28. The computer apparatus according to any one of preceding claims 25-27, further comprising means for displaying a set of configuration parameters resulting from the selected components for the operator on said display screen.

29. A method for operating a computer apparatus for receiving commands related to creation of processing chains for processing transaction messages comprising any one of the steps in claim 1-8.
